# FASCICULE DE BREVET EUROPEEN

(11) **EP 0 774 612 B1**
(45) Date de publication et mention de la délivrance du brevet: **13.01.1999**
(21) Numéro de dépôt: 96402430.1
(22) Date de dépôt: 14.11.1996
(51) Int. Cl.: F16L 59/02

(54) **Système d'isolation thermique d'un conduit**
Wärmedämmungssystem für eine Rohrleitung
Thermal insulation system for a pipe

(30) Priorité: 16.11.1995 FR 9513601
(43) Date de publication de la demande: 21.05.1997
(73) Titulaire: ELF AQUITAINE PRODUCTION, 92400 Courbevoie (FR)
(72) Inventeur: Beauquin, Jean-Louis, 64110 Saint Faust (FR)
(74) Mandataire: Timoney, Ian Charles Craig

(56) Documents cités:
- AT-B- 393 313
- DE-A- 4 106 727
- GB-A- 690 888
- US-A- 4 271 218

## Description

La présente invention se rapporte à un système d'isolation thermique et/ou acoustique d'un conduit et, plus particulièrement d'un conduit destiné à permettre l'écoulement d'effluents, par exemple d'hydrocarbures provenant d'une source quelconque qui peut être un gisement pétrolier.

L'isolation acoustique intéresse surtout les conduits qui sont à proximité des milieux vivants : conduits aériens et sous-marins ou réseaux de conduits enfouis dans le sol. Par exemple, lors de fortes vitesses d'écoulement avec plus ou moins de gaz, les conduits et leurs singularités tels que coudes, tés, vannes, etc... génèrent des niveaux sonores nuisibles pour l'homme et l'environnement. Bien que peu pratiquée actuellement, l'isolation acoustique contribue au confort de l'homme, à la sécurité du travail et à la protection de l'environnement.

Lors de la mise en production d'un gisement pétrolier, des hydrocarbures s'écoulent dans un conduit, appelé colonne de production, depuis le fond du puits jusqu'à la surface. Au fond du puits, la pression et la température sont relativement élevées, par exemple 100°C et 300 bars. Lors de la remontée des hydrocarbures vers la surface, ces pression et température décroissent avec, comme résultat que la température en sortie du puits est par exemple de l'ordre de 30°C.

Cette baisse de température des hydrocarbures dans la colonne de production a pour effet d'accroître la viscosité et le poids de ces hydrocarbures, ce qui peut entraîner un ralentissement de leur écoulement. De plus, la baisse de température peut parfois provoquer le dépôt, sur la paroi de la colonne, d'hydrates ou de paraffines. S'il s'accumule dans le conduit, ce dépôt peut provoquer de graves problèmes d'exploitation tels que le ralentissement des hydrocarbures, voire l'obstruction totale du conduit. Généralement, s'il veut éviter ces risques, l'exploitant est obligé de traiter ce phénomène de dépôt, soit en prévention par injection de produit chimique inhibant le dépôt, soit en curatif en raclant ou grattant le conduit avec des équipements spéciaux ou encore en le réchauffant par un moyen éventuellement disponible. Dans tous les cas, ces opérations constituent une dépense d'argent importante. Ce type de problème se présente également dans les conduits qui relient une tête de puits à un centre de traitement éloigné.

La nécessité que l'effluent reste froid peut aussi se présenter, quand par exemple, on injecte de l'eau depuis la surface en direction du gisement. On a parfois intérêt à ce que l'eau ne soit pas réchauffée par les terrains extérieurs durant ce parcours, par exemple pour maintenir son poids ou provoquer certains phénomènes thermiques favorables à l'injectivité dans le gisement (fragilisation de la roche par le froid en vue de sa fracturation thermique). Dans ce cas, l'isolation thermique du conduit permet un gain de temps sur l'occurrence du phénomène thermique ainsi qu'un meilleur maintien lors d'arrêts ou encore de protéger, autour du conduit, l'ensemble de l'ouvrage qui peut être sensible aux variations thermiques (contraction du cuvelage, fracture des cimentations, etc...)

Certains puits sont situés dans des régions où la température du sol est très basse. Il a déjà été proposé d'équiper la colonne de production d'un chauffage électrique afin de maintenir la température des effluents. Cependant, la réalisation, la mise en oeuvre et la consommation énergétique de ce type d'installation sont très coûteuses, ce qui limite sensiblement son utilisation.

La mise en place d'une isolation thermique autour d'un conduit ou d'une colonne de production, éventuellement couplée à un système de chauffage électrique ou autre, permet de maintenir à une valeur élevée la température des effluents lors de leur trajet, réduisant ainsi les dépôts sur la paroi de la colonne et autres problèmes associés à la température. Il est connu d'utiliser des conduits à double enveloppe et de placer par pompage un liquide chargé de particules solides ou bien un gel de liquide entre les deux parois depuis l'une des extrémités du conduit. Dans le cas d'un puits, les deux parois en question sont réalisées d'office, l'une par le tubage, l'autre par le cuvelage.

Cette formule destinée à bloquer la convection naturelle au sein du liquide qui occupe l'espace séparant les deux parois est relativement peu coûteuse d'emploi car elle évite généralement une intervention lourde de retrait des tubulaires. Mais sa performance d'isolation thermique est réduite à cause de la conductivité résiduelle élevée du milieu qui est de l'ordre de 0,6 W/m°C quand celui-ci est à base d'eau et de l'ordre de 0,13 W/m/°C quand il est à base de pétrole (huile, gasoil, etc...). De plus la stabilité de ces formules dans le temps où une température supérieure à 85°C est délicate à obtenir (sédimentation des particules pour les liquides chargés, perte de viscosité pour les gels liquides).

Il est connu aussi d'utiliser un conduit ou une colonne à double paroi construit par tronçons en usine dans lequel, entre les deux parois, est placé un vide poussé ou bien un gaz rare à basse pression (argon, xénon ou autre). Ce type de conduit offre une isolation thermique importante, mais sa construction compliquée à l'usine est très coûteuse et son encombrement important en diamètre extérieur limite considérablement son emploi. De plus, sa mise en place sur un système qui est déjà en exploitation nécessite le remplacement des conduits existants, ce qui augmente considérablement le coût de l'isolation.

Le document AT-393 313B décrit un élément isolant, en forme de manchon, pour tubes, le manchon isolant étant en matière plastique en forme de mousse. Le manchon est formé à partir d'une bande, présentant un profil bosselé, dont les bords longitudinaux sont reliés autour du tube à isoler. Ce type de manchon isolant ne peut pas être installé autour d'un tube qui est entouré d'une autre paroi.

La présente invention a donc pour objet un procédé d'isolation thermique d'un conduit qui permet de réaliser une isolation performante qui peut éventuellement être mise en place sur des conduits existants sans désinstaller ceux-ci.

Pour répondre à cet objet, l'invention propose un procédé d'isolation thermique et/ou acoustique d'un conduit entouré d'une enveloppe comprenant les étapes de :
- formation d'un gel liquide à partir d'un précurseur et d'un liquide,
- remplacement éventuel de la phase liquide par un solvant plus volatil, dans le but de faciliter l'étape de séchage,
- élimination du solvant contenu dans le gel afin de former un aérogel.

La présente invention a également pour objet un système d'isolation thermique d'un conduit obtenu par ce procédé d'isolation.

La présence d'une couche d'aérogel autour du conduit empêche la formation, dans le milieu entourant le conduit, de courants de convection, ce qui a pour résultat de réduire de manière substantielle les échanges de chaleur à la paroi du conduit. Par ailleurs, les alvéoles de l'aérogel constituent des matelas souples successifs qui amortissent les ondes sonores qui les traversent, ce qui a pour résultat de freiner la transmission des bruits (isolation acoustique).

La ventilation éventuelle de l'aérogel qui consiste à remplacer les vapeurs du solvant ayant servi au séchage par des gaz incondensables et plus isolants (par exemple, gaz rares (argon, xénon) ou bien azote.

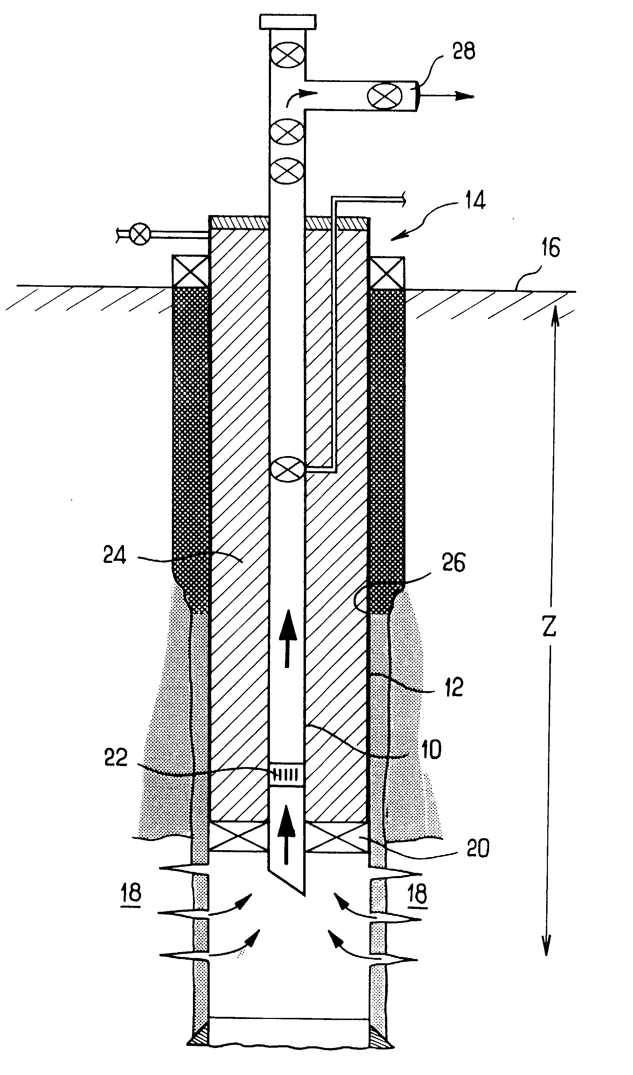

Les caractéristiques et avantages de la présente invention apparaîtront plus clairement à la lecture de la description ci-après faite en référence aux dessins annexés sur lesquels la figure unique est une vue en coupe schématique d'un conduit muni d'une isolation thermique selon l'invention dans l'exemple particulier d'un puits pétrolier.

Comme représenté sur la figure, un conduit qui, dans l'exemple illustré est une colonne d production 10, s'étend dans un puits 12 entre une tête de puits 14, disposée à la surface du sol 16, et une couche de roche pétrolifère 18. Vers son extrémité inférieure, en un point légèrement au-dessus d'un joint 20 disposé dans le puits 12, la colonne de production comporte un dispositif 22 permettant la circulation de fluides. Un espace annulaire 24 défini entre un cuvelage 26, qui forme la paroi du puits, et la colonne de production 10, est délimité par la tête de puits 14 et le joint 20. Cet espace est généralement plein de liquide qui peut être de l'eau douce, ou bien du gasoil par exemple, ou encore contenir du gaz.

Les effluents, par exemple des hydrocarbures, provenant d'une source que constitue la roche pétrolifère 18, remontent par la colonne de production 10 vers une sortie 28 située à la surface. Dans l'exemple illustré, la couche 18 se trouve à une profondeur Z de 3000 m, profondeur à laquelle les hydrocarbures sont à une température de 100°C et sous une pression de 300 bars. Dans un puits classique, lors de leur remontée, les hydrocarbures se trouvaient refroidis par exemple jusqu'à une température de l'ordre de 30°C à la sortie 28.

Selon l'invention, afin d'éviter cette baisse de température des hydrocarbures lors de leur remontée dans la colonne 10, avec les dépôts qui peuvent en résulter, une isolation thermique et/ou acoustique est disposée dans l'espace annulaire 24. Cette isolation thermique comprend un aérogel introduit, à partir de la surface, dans l'espace annulaire du puits.

La fabrication de l'aérogel commence par la fabrication d'un gel liquide à partir d'un précurseur et d'un liquide.

Le précurseur peut être constitué de silicate de soude, le liquide étant de l'eau. Toutefois, sa mise en oeuvre peut être lente car elle nécessite d'importantes opérations de lavage des sels et de l'eau résiduels par de l'alcool.

De préférence, le gel est préparé en milieu non aqueux, par exemple, dans de l'alcool, notamment du méthanol ou de l'éthanol. Dans ce cas, le précurseur utilisé peut être du type tétraéthylorthosilicate (TEOS), éventuellement partiellement hydrolysé ou polymérisé. Ce type de gel est de fabrication plus simple et plus rapide que les gels préparés en phase aqueuse.

Ensuite, on remplace la phase liquide du gel par un solvant adapté au séchage du gel. De préférence, on utilise comme solvant du CO₂ sous forme liquide. Cette opération d'extraction d'un solvant liquide par un deuxième s'effectue par percolation et diffusion du deuxième solvant au sein du gel.

### Séchage :

L'étape suivante de fabrication de l'aérogel est celle du séchage du solvant volatil contenu dans le gel liquide. Pour obtenir un aérogel, le gel liquide doit toujours être maintenu à une pression garantissant l'état liquide ou supercritique du solvant, pression qui dépend de la température effective. Toute vaporisation subcritique du solvant détruira la structure du gel qui doit être préservée pour l'obtention d'un aérogel. Une vaporisation subcritique donnerait un xérogel.

La pression pourra être relâchée seulement lorsque la température aura atteint ou sera portée à une valeur adéquate supérieure à la température critique du solvant contenu dans le gel. Par exemple, si le solvant de séchage est du CO2, son état supercritique (ou hypercritique) sera atteint au-delà de 31°C.

Lorsque cette température sera dépassée, on procédera à la détente lente du volume considéré de gel afin d'en extraire progressivement le solvant sous forme supercritique, caractérisée par la continuité parfaite entre l'état liquide et l'état gazeux.

Jusqu'à la fin de la détente, la température doit être maintenue au-delà du point critique, sinon la structure alvéolaire du produit séché final serait partiellement détruite, ce qui aurait pour résultat une forte contraction et un durcissement (on parle alors de xérogel). Une fois la détente et l'extraction du solvant achevées, les systèmes éventuels de chauffage peuvent être arrêtés, à condition cependant que la température d'équilibre qui en résultera au sein de l'aérogel soit telle que, compte tenu de la pression qui y règne, la totalité du solvant qui s'y trouve de manière résiduelle après séchage reste toujours sous forme gazeuse sans aucune condensation.

### Ventilation

Une étape supplémentaire peut être nécessaire dans le procédé qui dépend des conditions et contraintes d'emploi de l'aérogel. Si par exemple, pour une raison mécanique ou hydraulique, ce dernier doit être maintenu à une pression élevée de gaz et être localement en contact avec des parois froides, un gaz incondensable fait par exemple d'argon, xénon, krypton, azote ou autre peut s'avérer nécessaire pour remplacer dans les alvéoles le gaz résiduel du séchage qui est de la vapeur du solvant, par exemple du CO₂ gazeux. Sinon, cette vapeur risquerait de se condenser localement en détruisant l'aérogel.

Pour effectuer ce remplacement, on peut soit procéder à une circulation et une chasse de la vapeur de solvant par le gaz final souhaité, soit détendre très fortement la vapeur de solvant puis recomprimer le volume avec le gaz souhaité à la pression voulue.

On peut également effectuer plusieurs détentes successives suivies chaque fois d'une recompression par remplissage de gaz incondensable, ceci dans le but d'augmenter progressivement la proportion de gaz incondensable et d'éliminer ainsi l'essentiel de la vapeur de solvant.

On peut aussi avoir recours à des techniques de vide, soit pour effectuer ce remplacement, soit directement pour garantir au sein de l'aérogel une pression de vapeur de solvant ou autre vapeur telle qu'en aucun cas, en particulier dans les zones refroidies, une condensation des vapeurs en question n'ait lieu.

En particulier, ces systèmes de vide peuvent être maintenus lorsque l'on craint des fuites provenant de l'extérieur du volume qui, sinon, pourraient générer la formation de liquides.

On garantit ainsi l'évacuation permanente des entrées de fuite sous une forme gazeuse sans incidence sur l'état de l'aérogel. Toutefois, cela suppose que le volume supporte d'être maintenu dans l'état de dépression requis, qui dépend de la température la plus froide supposée du volume et de la tension de vapeur de la substance dont on craint la présence parasite (exemple : courant de l'eau, par l'humidité) .

### Moyens de chauffage

Plusieurs étapes du procédé selon l'invention nécessitent des apports de chaleur aux produits dont il est question, par exemples les étapes de gélification et de séchage.

Dans les variantes du procédé décrites ici pour lesquelles ces étapes sont prévues in situ dans l'espace (24), l'invention propose par exemple l'utilisation de systèmes de chauffage électriques parfois prévus dans la conception du conduit ou bien encore d'avoir recours à la circulation d'un fluide à la température adéquate, chaude ou froide, selon les besoins en question à l'intérieur du conduit. Dans l'exemple d'un puits pétrolier, la chaleur géothermique des terrains chauds autour du puits sera une première source de chaleur et la mise en production du puits par l'intérieur du conduit une seconde source. L'injection en sens inverse d'un fluide plus chaud ou froid dans le conduit permettra éventuellement de régler la température dans l'espace (24) à la valeur requise.

### Mise en Place

La mise en place du produit dans l'espace annulaire 24 destiné à contenir l'aérogel, qui est le produit final du procédé d'isolation décrit ici, peut se faire, au choix à différents stades de sa fabrication. Le choix est à faire en fonction des caractéristiques de sa destination : tenue mécanique de parois, température des parois, possibilités de chauffage, accessibilité, possibilités de pompage ou de soufflage, logistique et moyens de transport sur le site, etc...

Le choix peut être fait en vue d'un maximum d'économie sur le coût du résultat final ou sur des critères de performances techniques ou encore de sécurité de mise en oeuvre.

Quel que soit le stade de fabrication retenu pour l'effectuer, la mise en place du produit est achevée lorsque la totalité de l'espace prévu pour recevoir un aérogel isolant est remplie dudit produit. On procède alors à l'étape qui doit suivre dans le processus de fabrication et de ventilation de l'aérogel décrit par ailleurs, étape qui dépend du stade qui a été retenu pour faire la mise en place du produit.

De plus amples détails sur les spécificités propres au stade de fabrication auquel on choisit de faire la mise en place apparaîtront à la lecture de la description suivante.

Une première façon de faire consiste à placer autour du conduit des manchons d'aérogel préfabriqués par tronçons aux dimensions requises. Cette méthode n'est cependant applicable qu'aux conduits dont l'accessibilité directe est possible : conduits non enveloppés ou parfaitement positionnés sur toute leur longueur par rapport à leur enveloppe externe.

Une seconde façon de faire consiste à propulser par soufflage des fragments d'aérogel préfabriqué dont les dimensions leur permettent de circuler de cette manière dans l'espace annulaire auquel ils sont destinés. On pourra par exemple procéder en faisant le vide préalable, permettant de provoquer ensuite la succion de ces fragments d'aérogel par l'espace annulaire lui-même.

L'inconvénient de ces deux premières méthodes réside éventuellement dans la fragilité au transport et à la manutention des éléments d'aérogel préfabriqués éventuellement coûteux, dans la destruction partielle qui peut avoir lieu lors de ces opérations et par ailleurs dans l'inflexibilité de ces produits qui réduit leur faculté à épouser efficacement la forme de l'espace qui leur est destiné.

Ce sont quelques-unes des raisons pour lesquelles l'invention prévoit aussi la possibilité de réaliser ou achever la fabrication in situ de l'aérogel dans l'espace annulaire 24 où il est prévu de le placer. De ce point de vue, l'étape de séchage de l'aérogel est une étape charnière déterminant l'état physique (solide ou gel, éventuellement liquide non gélifié) dans lequel se trouve le produit lors de son transfert dans l'endroit prévu autour du conduit. Ainsi, toutes les façons de procéder à ce transfert du produit qui sont décrites ci-après prévoient, contrairement aux deux précédentes, la mise en place du produit avant son séchage. Ce séchage devra donc avoir lieu à l'endroit prévu pour l'aérogel autour du conduit, qui, dans ce cas, sera nécessairement un espace compris entre deux parois.

Lors de sa mise en place, le produit est donc, selon les cas, présentés maintenant à l'état de mélange liquide ou de gel plus ou moins visqueux. On procède alors dans tous les cas à l'injection du produit depuis le récipient qui le contient en direction de l'espace annulaire (24) destiné à recevoir l'aérogel isolant. S'il y a lieu, on procède à une chasse simultanée du fluide occupant au départ de cette opération l'espace (24), éventuellement en faisant usage du dispositif de circulation (22) si ce dernier a été prévu, qui met en communication hydraulique l'espace (25) avec l'intérieur du conduit (10). Ceci permet d'établir une circulation d'un bout à l'autre de l'espace (24), et ce, dans un sens ou dans l'autre. Ce sens est déterminé en fonction, par exemple, des densités des fluides à chasser par rapport à celle du produit à mettre à la place, ou bien selon la tenue en pression des parois comparée aux pressions nécessaires à propulser les fluides lors de l'opération pour vaincre les pertes de charge créées.

On peut aussi, par exemple, en l'absence du dispositif de communication hydraulique (22) ou bien pour éviter la réquisition du conduit (10) pour cette opération de transfert, procéder par une mise sous vide préalable de l'espace annulaire (24) qui suppose éventuellement son assèchement par évaporation des liquides éventuels qui occuperaient initialement cet espace. Ce préalable permet aussi de garantir un remplissage très efficace de l'espace (24) par le produit lors de son injection offrant une performance d'isolation optimale de l'aérogel final installé. En outre, la mise sous vide facilitera l'extraction du produit hors du récipient en direction d l'espace (24) . Dans certains cas, ceci pourra éviter l'utilisation d'une pompe de circulation ou de gavage lors du transfert du produit.

On peut aussi indiquer une troisième façon de faire dans laquelle le produit est mis en place à l'état de gel prêt au séchage, l'étape de lavage étant achevée au préalable, c'est-à-dire que la totalité du solvant contenu dans le gel est du solvant volatil, par exemple du CO₂, ou encore un mélange adapté d'alcool et de CO₂, défini en fonction des conditions de séchage qui vont pouvoir être mises en oeuvre in situ dans la totalité de l'espace (24) où est prévue la présence de l'aérogel isolant.

Cette méthode est très intéressante car elle garantit la qualité du gel et de son solvant avant mise en place, celle-ci se faisant plus facilement qu'à l'état solide et pouvant être directement suivie du séchage supercritique après un chauffage éventuel du gel.

Toutefois des inconvénients de cette méthode peuvent être la contrainte technique et le coût de la préparation, du stockage, du transport et de la mise en place du gel prêt au séchage dont il faut garantir des conditions spécifiques de température et de pression. Par exemple, si le solvant de séchage est du CO₂, le gel ("carbogel") sera éventuellement transporté et stocké dans une bonbonne à 20 bars et réfrigéré à -20°C.

De même, afin de conserver l'intégrité du gel, il peut être préférable de le maintenir en liquide subcritique, c'est-à-dire température inférieure à la température critique et pression suffisante pour éviter l'apparition de bulles de gaz, jusqu'à l'achèvement de sa mise en place. Cela peut être une difficulté sur des puits chauds par exemple, qui justifie qu'on ne procède au remplacement total du liquide par le solvant volatil qu'après la mise en place du gel dans l'espace (24).

Ainsi, l'invention prévoit un quatrième mode de réalisation dans lequel le gel est mis en place de la même manière que décrit précédemment alors que son état d'élaboration est moins avancé, ceci afin de simplifier et réduire le coût de sa préfabrication, de son stockage, de son transport et de sa mise en place dans l'espace 24. Ceci a pour conséquence que tout ou partie de l'étape décrite par ailleurs du remplacement du liquide contenu dans le gel par un solvant adapté au séchage doit être effectuée in situ dans l'espace 24. On peut pour cela, comme pour le transfert du gel dans l'espace 24, procéder de différentes manières : soit en utilisant le conduit et le dispositif (22) afin d'établir une circulation permettant l'extraction progressive du liquide à remplacer, soit en procédant par chauffage du gel au-dessus du point critique du liquide qu'il contient, puis compression en forçant dans le gel le solvant de séchage, qui par exemple est du CO2, suivie d'une détente partielle telle que le mélange dans le gel en soit jamais gazeux subcritique. On procède alors ainsi par compression -détentes successives au-dessus du point critique.

Dans les deux cas, cette étape de remplacement du solvant se termine lorsque l'analyse du fluide récupéré à l'extrémité de l'espace 24 indique une composition du fluide contenu dans le gel qui corresponde au solvant de séchage désiré.

Des difficultés peuvent aussi se présenter liées au transport, au stockage et au pompage de gels. Aussi, l'invention propose-t-elle un cinquième mode de réalisation dans lequel la gélification est faite in situ dans l'espace annulaire (24) prévu pour l'aérogel. L'avantage de cette méthode repose sur la facilité de pompage et l'extraction de produits non visqueux hors du récipient qui a servi à les acheminer sur le site de mise en place. L'avantage peut aussi porter sur les spécifications thermiques ou mécaniques, (par exemple tenues à la chaleur et/ou à la pression et systèmes de production de chaleur et/ou de mise en pression) qui peuvent être exigées à propos de l'enceinte où l'on procède à la gélification et qu'il est peut-être moins coûteux d'assurer pour l'enceinte finale prévue entre les parois du conduit que pour un récipient ne servant qu'à la préparation de gel et à son transport.

Dans ce cas, les constituants qui permettent la formation du gel sont mélangés au moment de leur pompage dans le volume où doit être placé l'aérogel. L'ajout du précurseur et additifs éventuels se fait en amont ou en aval de la pompe selon que l'on considère préférable l'une ou l'autre solution du point de vue par exemple, de la sécurité de l'opération ou de la qualité du mélangeage ainsi réalisé. Une fois terminée la mise en place du mélange dans l'espace (24) par l'une des méthodes décrites, on attend le temps nécessaire pour la gélification, en mettant en service les éventuels moyens de chauffage prévus à cet effet.

A noter qu'il est également possible de réaliser un reconditionnement in situ de l'aérogel en réalisant deux fois de suite l'étape décrite ci-dessus du séchage supercritique, une première fois dans l'ordre inverse afin de redissoudre ou remouiller l'aérogel et le rendre ainsi plus malléable, et une seconde fois dans l'ordre normal, afin de le ressécher, après un appoint éventuel avec un gel semblable. Cette opération permet de reconstituer plus ou mois complètement la structure monolithique de l'aérogel, donc de retrouver de bonnes caractéristiques d'isolation thermiques et acoustiques si celles-ci ont été dégradées d'une quelconque manière au fil de l'utilisation du conduit.

Cette procédure offre aussi la possibilité d'extraire l'aérogel du puits pour le transférer dans un autre contenant ou le transporter en vue de son utilisation ou de son stockage sur un autre site.

Il peut donc aussi être récupéré et mis en place après une intervention pour travaux ayant nécessiter son retrait.

## Revendications

1. Procédé d'isolation thermique d'un conduit entouré d'une enveloppe comprenant les étapes de :
- formation d'un gel liquide à partir d'un précurseur et d'un liquide,
- remplacement de la phase liquide par un solvant plus volatil,
- élimination du solvant contenu dans le gel afin de former un aérogel.

2. Procédé d'isolation selon la revendication 1, le précurseur étant du silicate de soude, le liquide étant de l'eau.

3. Procédé d'isolation selon la revendication 1, le précurseur étant du tétraéthylorthosilicate, le liquide étant de l'alcool.

4. Système d'isolation thermique d'un conduit, consistant en un manchon entourant le conduit sur au moins une partie de sa longueur, caractérisé en ce que le manchon est constitué d'un aérogel obtenu par le procédé de l'une des revendications 1 à 3.

## Patentansprüche

1. Verfahren zum thermischen Isolieren einer von einem Mantel umgebenen Leitung, welches die Schritte aufweist
- Bildung eines flüssigen Gels ausgehend von einem Vorläufer und einer Flüssigkeit,
- Austausch der flüssigen Phase durch ein flüchtigeres Lösungsmittel,
- Beseitigen des in dem Gel enthaltenen Lösungsmittels zur Bildung eines Aerogels.

2. Isolierverfahren nach Anspruch 1, bei welchem der Vorläufer Natriumsilicat und die Flüssigkeit Wasser ist.

3. Isolierverfahren nach Anspruch 1, bei welchem der Vorläufer Tetraethylorthosilicat und die Flüssigkeit Alkohol ist.

4. System zum thermischen Isolieren einer Leitung bestehend aus einer Hülse, die die Leitung auf wenigstens einem Teil ihrer Länge umschließt, dadurch gekennzeichnet, daß die Hülse von einem Aerogel gebildet wird, das nach dem Verfahren eines der Ansprüche 1 bis 3 erhalten wird.

## Claims

1. Method for thermal insulation of a pipe surrounded by a covering comprising the steps of:
- formation of a liquid gel from a precursor and a liquid,
- replacement of the liquid phase by a more volatile solvent,
- elimination of the solvent contained in the gel in order to form an aerogel.

2. Insulation method according to Claim 1, the precursor being sodium silicate, and the liquid being water.

3. Insulation method according to Claim 1, the precursor being tetraethylorthosilicate, and the liquid being alcohol.

4. System for thermal insulation of a pipe, consisting of a sleeve surrounding the pipe over at least a part of its length, characterized in that the sleeve consists of an aerogel obtained by the method of one of claims 1 to 3.
